# EUROPEAN PATENT SPECIFICATION

(11) **EP 3 747 316 B1**
(45) Date of publication and mention of the grant of the patent: **19.01.2022**
(21) Application number: 20178012.9
(22) Date of filing: 03.06.2020
(51) Int. Cl.: A47G 19/02, A47G 21/00, A47G 29/14, C08J 3/22, C08K 5/098, C08K 3/34

(54) **INJECTION PROCESS FOR THE PRODUCTION OF PET AND RPET ARTICLES AND ARTICLES OBTAINED THEREBY**
INJEKTIONSVERFAHREN ZUR HERSTELLUNG VON PET- UND RPET-ARTIKELN UND DADURCH ERHALTENE ARTIKEL
PROCÉDÉ D'INJECTION POUR LA PRODUCTION D'ARTICLES EN PET ET RPET ET ARTICLES AINSI OBTENUS

(30) Priority: 04.06.2019 IT 201900008022
(43) Date of publication of application: 09.12.2020
(73) Proprietor: Plastec Srl, 25064 Gussago, Brescia (IT)
(72) Inventor: RODELLA, Luca Luigi, 25064 Mandolossa (IT); SONZOGNI, Giovanni, 24068 Seriate (IT)
(74) Representative: Serravalle, Marco

(56) References cited:
- DE-A1- 2 014 770
- JP-A- 2001 200 148
- JP-A- 2005 105 059
- US-A- 4 886 847
- US-A1- 2016 376 436
- US-A1- 2019 144 661

## Description

### Field of the invention

**.** The present invention is directed to the production of PET molded articles. More particularly, the present invention is directed to a process for the production of molded PET articles presenting good mechanical and thermal resistance together with a good surface finish. The invention is also directed to a process for the production of partly crystallized molded PET articles, which process is characterized by the use of a cooled mold. Furthermore, the present invention is directed to a method to modulate mechanical and thermal properties of injection molded PET articles.

### Background of the invention

**.** In 2015, 27.8 million tons PET were produced worldwide. About 70 % of the produced PET was used to produce bottles. Recycle of plastic is nowadays a huge environmental problem. PET is the most recycled plastic in the world, and it is also known as rPET. According to PETRA (PET Resin Association), in 2012, the percentage of recycle was 31 % in the USA and 52 % in the EU. In 2015, about 9 million tons PET were recycled to produce a large variety of products.

**.** RPET is used for new products such as fibres for carpets, textile for t-shirts, petticoats, sport shoes, luggage, wallpaper, sweaters, and padding for sleeping bags and coats. The use of RPET instead of virgin PET generally leads to a reduction of energy consumption and environmental impact.

**.** The use of PET (both virgin and recycled) in the field of injection molding has found, up to date, only a limited number of applications due to PET characteristics. Amorphous PET has poor thermal characteristics and becomes soft at relatively low temperatures (75-80 ° C). Crystalline PET increases its thermal resistance at increasingly high crystallinity levels. However, the higher the percentage of crystallinity, the higher becomes fragility. Crystallization of PET takes place at 150-160° C and requires a considerable amount of time in the absence of a nucleating agent. Thus, to obtain at least partly crystalline injection molded PET articles, there were two possibilities: the first one is to leave the article in the hot mold for a certain amount of time, the second is to cool down the mold, extract the article and then heat it again in an oven for a predetermined period of time. In both cases, the process is rather expensive either because of the long cycle molding time, or because of the extra step in the oven. Furthermore, it was impossible, up to date, to produce either thick or very thin articles. In fact, if the article is thin, the molten PET does not fill the mold completely, if the thickness is high, the surface of the article has poor finish, because of superficial shrinkage defects.

. NL7004524 discloses the use of a nucleating agent such as a benzoate, a stearate or a terephthalate to increase the crystallization rate of PET. The process is conducted heating the mold at 150°C. Although this process increases the crystallization rate of PET, it does not solve the problem of reducing the cycle time of the process to an industrially acceptable level. In fact, the process described in NL7004524 requires that the article be cooled in the mold. Industrially, it is essential to extract the article from the mold as soon as possible to have a short cycle time.

. DE 20 14 770 discloses a process for the injection molding of PET wherein PET comprises a nucleating agent. The document discloses cooling the mold at a temperature of 40°C.

. US 2019/0144661 discloses polyester articles, including PET articles, which are obtained by injection molding. The composition which is subjected to injection molding comprises a nucleating agent and from 10 to 20% of a plasticizer. The obtained article has a high degree of crystallinity.

. US 4,886,847 in the example 1 discloses the use of sodium benzoate as a nucleating agent for PET but does not specify the process conditions in an injection molding process.

### Summary of the invention

. The present invention is directed to a process for the production of PET articles wherein PET is the only polymer present in the articles, which process comprises adding to PET a nucleating agent, homogenizing PET and nucleating agent and injecting the obtained PET in a mold, wherein the mold is cooled at a temperature equal to or lower than 30°C and the amount of nucleating agent is comprised between 0.10 wt % and 0.25 wt %. In a preferred embodiment, the mold is cooled by using water and the temperature of water is kept at a temperature equal to or lower than 30°C.

. It has been found that, by injecting a PET composition comprising a nucleating agent in a cooled mold, it is possible through an accurate dosing of the amount of nucleating agent, to obtain PET articles having improved characteristics. The articles obtained by the process according to the present invention present a crystallinity level that allows a good thermal stability and, at the same time, good mechanical properties, i.e. good rigidity without fragility. Furthermore, the articles according to the present invention can be molded in a large variety of shapes. It has been found that the nucleating agent according to the invention also acts as a fluidifying agent and allows the use of molds having both large and small ratio length to thickness.

**.** Furthermore, the process according to the invention represents an important improvement with respect to the process of the prior art in terms of cycle time. In fact, by cooling the mold, it is possible to remove the article from the mold after a very short time. This allows a much higher production rate of the injection mold.

. In another embodiment, the invention is directed to a PET injection molded article, wherein PET is the only polymer present in the article, comprising a nucleating agent in an amount comprised from 0.10 wt % to 0.25 wt %, plasticizers in an amount lower than 5 wt %, and having a degree of crystallinity as measured by DSC comprised between 18 % and 28 %.

### Brief description of the drawings

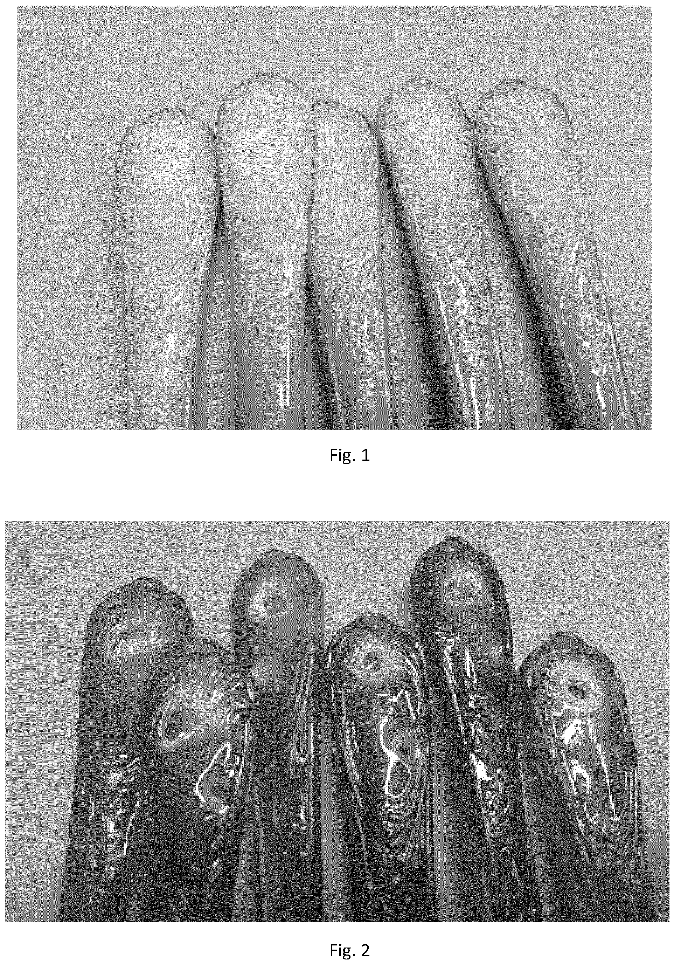

. Fig. 1 shows PET knives obtained according to the process of the present invention injection molded with a mold cooled down at 17,5°C and containing 0.125 % sodium benzoate.
. Fig. 2 shows PET knives obtained with the same process of the knives of Fig. 1 but without sodium benzoate.

### Detailed description of the invention

. The present invention is directed to a process for the production of PET articles wherein PET is the only polymer present in the articles, by injection molding, which process comprises the following step: adding a nucleating agent to PET; homogenizing the nucleating agent and PET; injecting the homogenized PET in a mold, wherein the mold is cooled down at a temperature lower than 30°C and the amount of nucleating agent is comprised between 0.10 wt % and 0.25 wt %.

. Injection molding is the most common process utilized for producing plastic articles. During injection molding, a material (in the present case PET, virgin or recycled) is melted and injected into a mold usually composed of two halves. Once the material in the mold is solid, the two halves of the mold are opened and the article extracted from the mold.

. The first section of an injection molding machine consists of one or sometimes two screws, fed by a hopper, wherein the material is charged together with all additives. As the material enters the injection barrel, it is driven forward by the rotation of the screw and it is heated by friction and by heating jackets. In the final part of the screw, the material reaches a temperature suitable for the injection molding step and is homogenized. A suitable temperature to be achieved in this section of the machine depends on the type of material and on the design of the mold. In fact, it is essential that the not only the material remains melted until it reaches the farthest point of the mold, but also it is important that viscosity of the molten material be low enough to flow in the mold and reach every point of the mold. For PET, it is normally heated in the first part of the machine to a temperature preferably comprised between 260 and 280°C. As stated above, in the barrel the polymer is also homogenized. However, it is preferred that the polymer and the additives be introduced in the barrel with already a good level of homogenization.

**.** The molten material is then injected into the mold. After the mold cavity is filled, holding pressure is applied to compensate for resin shrinkage caused by cooling. Appropriate holding pressure and holding time will be maintained to push the mold screw, to continue injecting molten resin into the cavity. Holding pressure has a great influence on product shrinkage rate. Once the mold is completely filled, the machine waits for a predetermined time before opening the two halves of the mold. This is the time which is required for the article to become dimensionally stable, i.e. to maintain the shape once extracted from the mold. The cycle time is basically the sum of injection time, holding time and cooling time.

**.** Preferably, the mold is provided with a cooling jacket and a cooling fluid is circulated in the cooling jacket. Although it is possible to use any fluid suitable for the purpose, for economic reasons it is preferred to use water. Water circulating into the jacket is preferably cooled down by a heat exchanger. When exiting the mold jacket, water has a temperature lower than 30°C, preferably equal to or lower than 25°C, even more preferably equal to or lower than 20°C, even more preferably equal to or lower than 15°C.

**.** The nucleating agent used in the present invention can be any compound known in the art as a nucleating agent for plastic materials. A large list of nucleating agents is disclosed in DE 20 14 770. Examples of preferred nucleating agent for use in the present invention are alkaline salts of benzoic, stearic, phthalic acid. With the term alkaline salts, it is intended salts of lithium, sodium and potassium. Preferred alkaline salts are salts of sodium and potassium. Preferred nucleating agent are sodium benzoate, potassium benzoate, sodium stearate, potassium stearate, sodium phthalate, potassium phthalate, and mixtures thereof. A most preferred nucleating agent is sodium benzoate.

**.** Dispersion of the nucleating agent can be performed according to different methods: 1) directly adding the nucleating agent in any form (powder, granules or liquid) in PET (or rPET); this method is not preferred because, when adding directly the nucleating agent to PET, it is it is difficult to control that the mixture is well homogenized; 2) PET is first extruded in the presence of the nucleating agent and the PET granules are then used for injection molding; 3) dispersion of the nucleating agent in the master-batch used for dyeing PET.

**.** Apart from the nucleating agent, the PET composition can comprise conventional additives used in injection molding, e.g. colorant, plasticizers, stabilizers, anti-oxidants, flame-retardants, UV absorbers, antistatic agents, lubricants.

**.** The amount of nucleating agent in the final PET composition is comprised between 0.10 and 0.25 wt %. When the amount of nucleating agent is too low, the cycle time remains high. The crystallization rate increases by increasing the amount of nucleating agent, but once achieved a certain amount of nucleating agent, a further increase would not produce any relevant effect on the crystallization of PET. With maximum degree of crystallization, it is intended the percentage of crystallization obtained by cooling the article during DSC. With relative crystallinity it is intended the ratio between crystallinity and maximum crystallinity. The relative crystallinity is comprised between 50 and 95%, preferably between 60 and 90%. In term of crystallinity, the articles according to the present invention are characterized by a crystallinity comprised between 18 and 28%.

**.** In the present invention, the molding process makes use of a nucleating agent. The term nucleating agent covers any material, compound or composition which produces an increase in the amount of crystalline PET of the molded article. Another effect of the nucleating agent is to increase the temperature at which the molten PET starts to form crystals. When PET does not contain a nucleating agent, it starts forming crystals at a temperature below 200°C, e.g. at a temperature comprised between 180°C and 196°C. The presence of a nucleating agent allows the first crystals to be formed at a temperature higher than 200°C, for example at a temperature comprised between 205°C and 215°C. It is evident that when starting the crystallization process at a higher temperature, PET has a longer time to form crystals before reaching the temperature at which the crystallization process is stopped. For the purposes of the present invention, it is defined a nucleating agent any compound or composition that results in a crystallization temperature T_{c} of PET as measured by DSC during first cooling higher than 200°C, preferably higher than 203°C, even more preferably higher than 206°C.

**.** Furthermore, the crystallization rate is increased by the presence of increasing amounts of nucleating agent. As stated above, the amount of crystalline PET obtained in an injection-molded article depends on the time the polymer remains in the mold at a temperature lower than T_{c} but higher than T_{g}, which is the temperature at which crystallization is stopped. When working in the absence of a nucleating agent and with a mold cooled at a temperature below 40°C, the amount of crystalline PET will vary from 5% and 15%, depending on the size of the mold, the injection time and the thickness of the mold.

**.** In conventional injection molding processes for the production of PET articles, a plasticizer may be added to the composition. The addition of a plasticizer significantly lowers the Tg of PET and allows crystallization to continue at lower temperatures then it would happen in the absence of a plasticizer. Consequently, the use of a plasticizer results in an increase of crystallinity of the product when compared to the same process in the absence of a plasticizer.

**.** Although it is possible within the scope of the present invention to use plasticizers, it is preferred to limit its amount to less than 5 wt %, preferably less than 3 wt %, more preferably less than 2wt %. For example, the composition is preferably substantially free of plasticizers.

**.** The process and the articles according to the present invention make use of PET. PET is the only polymer present in the composition used for injection molding and in the article. In this way, it is possible to consider the PET article as 100% recyclable.

**.** The presence of nucleating agent is effective because of two factors: as stated above, crystallization starts earlier, at a temperature 15-25 °C higher than in the absence of a nucleating agent. This effect does not seem to be proportional to the amount of nucleating agent and already with an amount of 0.05 wt % of nucleating agent T_{c} is sharply increased; once started nucleation, the nucleating agent accelerates the formation of crystals; this second effect increases with the increase of the amount of nucleating agent, but most of the effect is achieved with 0.3 wt % of nucleating agent. A further increase from 0.3 to 0.5 wt % of nucleating agent gives rise to only a minor increase in the percentage of crystallinity.

**.** It has been surprisingly found that it is enough to reduce crystallinity of a very few percentages, e.g. from 32 % to 30% or 29 % or 28 %, to significantly improve mechanical characteristics without losing in thermal resistance. As a consequence, it is possible to modulate crystallinity, and thus mechanical and thermal properties of PET by varying the amount of nucleating agent between 0.10 wt % and 0.25 wt %. By selecting the proper amount of nucleating agent, it is possible to produce PET articles showing good mechanical resistance and form stability at 75°C. In this way, it is possible to use PET for tableware articles since 75°C is the maximum temperature used in dishwashing machines.

**.** Thus, the process of the present invention is suitable for the production of cutlery, glassware and serving dishes commonly used on the dining table. Examples of article which are produced by the process according to the invention are kitchen article selected from a bowl, a tray, a basin, a glass, a cutlery, a dish.

**.** In a further aspect, the present invention is directed to an injection molding process for the production of PET articles in a mold having a ratio length to thickness higher than 60, which process comprises adding to PET an amount of nucleating agent comprised between 0.1 wt % and 1 wt %, preferably from 0.15 wt % to 0.5 wt %. It has been found that by using a nucleating agent, it is possible to properly mold thin articles which could not have been molded before.

### Experimental section

**.** The percentage of crystallinity was measured by DSC according to the following procedure: a sample was heated from 25°C to 290°C at a rate of 10°C/min, kept at 290°C for 5 min, then cooled down at a rate of -10°C/min till 25°C, kept at 25°C per 2 min, then heated a second time at 10°C/min till 290°C. During the first heating, once reached Tg, PET crystallizes, reaching the maximum degree of crystallization, and melts at a temperature of around 250°C. During cooling, the polymer crystallizes again. The temperature of peak of crystallization is indicated as Tc. During the first heating, there is a release of energy due to crystallization of PET (ΔHcc, 120-130°C) then all crystalline PET melts (ΔHm, 200-250°). During cooling PET crystallize again and the plot shows a peak ΔHc approximately equal to -ΔHm. By knowing that the enthalpy of fusion of theoretical 100% crystalline PET is 140,1 J/g, it is possible to calculate the maximum degree of crystallization of each sample as a ratio between ΔHc and 140.1 J/g. The percentage of crystalline PET present in the sample can be calculated as (ΔHc-ΔHcc)/140,1 x 100. The value (ΔHc-ΔHcc)/ΔHc x 100 represents the relative crystallinity, i.e. the percentage of crystallinity compared to the maximum crystallinity.

**.** A first set of PET containing 0%, 0.3 wt %, 0.4 wt % and 0.5 wt % of sodium benzoate was subjected to DSC. The sample was taken from the blade of the knives of Fig. 1 and 2. Table 1 reports the values of Tg, Tcc, Tm and Tc which are respectively the glass transition temperature, the temperature of the crystallization peak during first heating, the temperature of the melting peak during first heating, and the temperature of the crystallization peak during cooling.

**Table 1**

| Amount NaBz | Tg (°C) | Tcc (°C) | Tm (°C) | Tc (°C) |
|---|---|---|---|---|
| 0.0% | 80.7 | 129.0 | 251.4 | 195.0 |
| 0.3 % | 78.9 | 115.3 | 251.1 | 209.0 |
| 0.4 % | 76.9 | 114.6 | 252.7 | 209.4 |
| 0.5 % | 77.4 | 122.2 | 252.4 | 208.3 |

**.** Table 2 reports the enthalpy values ΔHcc and ΔHm (absolute values) of the different samples in J/g, maximum crystallinity, crystallinity and relative crystallinity.

**Table 2**

| Amount NaBz | ΔHcc | ΔHc | Max. cry. % | Cryst. % | Rel. cry. % |
|---|---|---|---|---|---|
| 0.0% | 23.5 | 42.2 | 30.5 | 13.5 | 44.4 |
| 0.3 % | 5.1 | 45.1 | 32.1 | 28.4 | 88.6 |
| 0.4 % | 1.9 | 45.5 | 32.6 | 31.2 | 95.7 |
| 0.5 % | 1.1 | 43.9 | 29.9 | 29.15 | 97.5 |

**.** A second set of PET samples containing an amount of sodium benzoate comprised between 0 % and 0.3 % was subjected to DSC. The samples were specimen suitable for ISO 527 tests obtained by injection molding. Table 3 and Table 4 report the results.

**Table 3**

| Amount NaBz | Tg (°C) | Tcc (°C) | Tm (°C) | Tc (°C) |
|---|---|---|---|---|
| 0.0% | 80.0 | 136.0 | 247.0 | 188.8 |
| 0.05 % | 81.2 | 128.3 | 249.7 | 202.5 |
| 0.1 % | 79.7 | 126.0 | 248.7 | 204.3 |
| 0.2 % | 80.2 | 122.3 | 252.3 | 206.6 |
| 0.3 % | 80.2 | - | 252.3 | 210.5 |
| 0.4 % | 78.7 | - | 251.0 | 210.0 |

**Table 4**

| Amount NaBz | ΔHcc | ΔHc | Max. cry. % | Cryst. % | Rel. cry. % |
|---|---|---|---|---|---|
| 0.0% | 28.5 | 36.7 | 26.2 | 5.9 | 22.5 |
| 0.05 % | 14.0 | 38.0 | 27.1 | 17.1 | 69.1 |
| 0.1 % | 12.8 | 42.8 | 30.5 | 21.4 | 70.2 |
| 0.2 % | 3.5 | 40.6 | 29.0 | 26.5 | 91.4 |
| 0.3 % | - | 41.6 | 29.7 | 29.7 | 100.0 |
| 0.4 % | - | 43.2 | 30.8 | 30.8 | 100.0 |

**.** The cutlery of Figs 1 and 2 have been produced by using a mold cooled down to 20°C. Fig. 1 shows the result obtained by using 0.25 wt % of Na benzoate, while in Fig. 2 are shown the cutlery obtained by using 0% of Na benzoate. Clearly, the cutlery shows an important defect probably due to a higher viscosity of PET in the absence of the nucleating agent.

**.** A hexagonal tray having diameter of 35 cm has been produced by injection molding using PET containing 0.25 wt % Na benzoate and by the following injection conditions: injection time 3 s, holding pressure time 5 s, cooling time 30 s. The mold was cooled down at a temperature of 20°C. The obtained tray did not show any defect. The same process was performed by using PET with no nucleating agent. The obtained tray was not suitable because the injection carrot broke before opening the mold. The cooling time was progressively increased to 35 s, 40 s, 45 s, 50 s, 75 s, 80 s, 100 s, but the problem was not overcome.

**.** PET trays having a thickness of 1.6 mm and size of 165x162x65 mm were injected starting from PET containing an amount of sodium benzoate comprised between 0 and 0.5 wt %. Sodium benzoate was first dispersed in PET in a ratio 80/20 PET/NaBz, to simulate the use of a masterbatch. The masterbatch was then mixed with PET to form final compositions having the following sodium benzoate concentrations: 0.05%, 0.10%, 0.15%, 0.20%, 0.25%, 0.30%, 0.50%. The trays were immersed in hot water (85°C) to make an evaluation of the thermal resistance and tightened in a clamp to make an evaluation of the mechanical properties, especially fragility. The tray without nucleating agent was perfectly transparent, did not break in the clamp, but it deformed in hot water. On the contrary, the trays with an amount of benzoate equal to or higher than 0.3% had an excellent thermal resistance but were fragile at the clamp, breaking when tightened. The best results in term of aesthetic appearance and mechanical/thermal properties was achieved when using an amount of benzoate comprised between 0.10 and 0.25%.

## Claims

1. A process for the production of PET articles wherein PET is the only polymer present in the article, which process comprises the following steps:
a. adding a nucleating agent to PET;
b. homogenizing PET and the nucleating agent;
c. injecting the homogenized mixture into a mold;
**characterized in that** the mold is cooled at a temperature equal to or lower than 30°C and the amount of nucleating agent is comprised between 0.10 wt % and 0.25 wt %.

2. The process according to claim 1, wherein the nucleating agent is a compound or composition that results in a crystallization temperature Tc of PET, as measured by DSC according to the method disclosed in the description during first cooling, higher than 200°C.

3. The process of claim 2, wherein the nucleating agent is selected from an alkali salt of benzoic acid, terephthalic acid or stearic acid.

4. The process according to claim 3, wherein the alkali salt is selected from potassium benzoate and sodium benzoate.

5. The process according to claims 1-4, wherein the mold has a cooling jacket and is cooled by water, and wherein water temperature at the exit of the cooling jacket is equal to or lower than 25°C, preferably equal to or lower than 20°C, most preferably equal to or lower than 15°C.

6. The process according to claims 1-5, wherein PET is virgin PET, recycled PET or a mixture thereof.

7. The process according to claims 1-5, wherein the nucleating agent is first dispersed in a masterbatch of PET in an amount comprised between 5 wt % and 50 wt %.

8. A PET injection molded article, wherein PET is the only polymer present in the article, comprising a nucleating agent in an amount comprised from 0.10 wt % to 0.25 wt %, plasticizers in an amount lower than 5 wt %, and having a degree of crystallinity as measured by DSC according to the method disclosed in the description comprised between 18 % and 28 %.

9. The article according to claim 8, wherein the nucleating agent is a compound or composition that results in a crystallization temperature Tc of PET as measured by DSC according to the method disclosed in the description during first cooling higher than 200°C.

10. The article of claim 9, wherein the Tc is higher than 203°C.

11. The article of claims 8-10, further comprising one or more conventional additives used in injection molding selected from stabilizers, anti-oxidants, flame-retardants, UV absorbers, antistatic agents, lubricants.

12. The article according to claims 8-11, wherein the article is a kitchen article selected from a bowl, a tray, a basin, a glass, a cutlery, a dish.

13. The article of claims 8-12, wherein the article is free of plasticizers.

## Patentansprüche

1. Verfahren zur Herstellung von PET-Produkten, wobei PET das einzige Polymer ist, das in dem Produkt vorhanden ist, wobei das Verfahren die folgenden Schritte umfasst:
a. Zugabe eines Nukleierungsmittels zum PET;
b. Homogenisieren des PET und dem Nukleierungsmittel;
c. Einspritzen der homogenisierten Mischung in eine Form;
**dadurch gekennzeichnet, dass** die Form auf eine Temperatur von 30°C oder weniger gekühlt wird und die Menge des Nukleierungsmittels zwischen 0,10 Gew.-% und 0,25 Gew.-% liegt.

2. Verfahren nach Anspruch 1, wobei das Nukleierungsmittel eine Verbindung oder Zusammensetzung ist, die zu einer Kristallisationstemperatur Tc des PET führt, die höher als 200°C ist, gemessen mit DSC gemäß dem in der Beschreibung offenbarten Verfahren während der ersten Abkühlung.

3. Verfahren nach Anspruch 2, wobei das Nukleierungsmittel aus einem Alkalisalz von Benzoesäure, Terephthalsäure oder Stearinsäure ausgewählt ist.

4. Verfahren nach Anspruch 3, wobei das Alkalisalz ausgewählt ist aus Kalium, Kaliumbenzoat und Natriumbenzoat.

5. Verfahren nach den Ansprüchen 1 - 4, wobei die Form einen Kühlmantel aufweist und mit Wasser gekühlt wird und wobei die Wassertemperatur am Ausgang des Kühlmantels gleich oder kleiner als 25°C, vorzugsweise gleich oder kleiner als 20°C, am bevorzugtesten gleich oder kleiner als 15°C ist.

6. Verfahren nach den Ansprüchen 1 - 5, wobei PET neues PET, recyceltes PET oder ein Gemisch davon ist.

7. Verfahren nach den Ansprüchen 1-5, wobei das Nukleierungsmittel zunächst in einem Masterbatch von PET in einer Menge zwischen 5 Gew.-% und 50 Gew.-% dispergiert wird.

8. Spritzgußprodukt aus PET, wobei PET das einzige in dem Produkt vorhandene Polymer ist, umfassend ein Nukleierungsmittel in einer Menge von 0,10 Gew.-% bis 0,25 Gew.-%, Weichmacher in einer Menge von weniger als 5 Gew.-%, und mit einem Grand an Kristallinität, der gemessen durch DSC gemäß dem in der Beschreibung offengelegten Verfahren zwischen 18 % und 28 % liegt.

9. Produkt nach Anspruch 8, wobei das Nukleierungsmittel eine Verbindung oder Zusammensetzung ist, die zu einer Kristallisationstemperatur Tc von PET führt, die gemessen durch DSC gemäß dem in der Beschreibung offengelegten Verfahren während der ersten Abkühlung höher als 200°C ist.

10. Produkt nach Anspruch 9, wobei Tc größer als 203°C ist.

11. Produkt nach einem der Ansprüche 8 - 10, das außerdem einen oder mehrere herkömmliche, beim Spritzguss eingesetzte Zusatzstoffe enthält, die aus Stabilisatoren, Antioxidantien, Flammschutzmitteln, UV-Absorbern, antistatischen Mitteln und Schmiermitteln ausgewählt sind.

12. Produkt nach einem der Ansprüche 8 - 11, wobei das Produkt ein Küchenartikel ist, ausgewählt aus einer Schüssel, einem Tablett, einem Becken, einem Glas, einem Besteck, einer Schale.

13. Produkt nach einem der Ansprüche 8 - 12, wobei das Produkt frei von Weichmachern ist.

## Revendications

1. Procédé de production d'articles en PET, dans lequel le PET est le seul polymère présent dans l'article, lequel procédé comprend les étapes suivantes :
a. l'ajout d'un agent de nucléation au PET ;
b. l'homogénéisation du PET et de l'agent de nucléation ;
c. l'injection du mélange homogénéisé dans un moule ;
**caractérisé en ce que** le moule est refroidi à une température égale ou inférieure à 30 °C et la quantité d'agent de nucléation est comprise entre 0,10 % en poids et 0,25 % en poids.

2. Procédé selon la revendication 1, dans lequel l'agent de nucléation est un composé ou une composition qui conduit à une température de cristallisation Tc du PET, telle que mesurée par ACD selon la méthode divulguée dans la description pendant le premier refroidissement, supérieure à 200 °C.

3. Procédé selon la revendication 2, dans lequel l'agent de nucléation est choisi parmi un sel alcalin d'acide benzoïque, d'acide téréphtalique ou d'acide stéarique.

4. Procédé selon la revendication 3, dans lequel le sel alcalin est choisi parmi le benzoate de potassium et le benzoate de sodium.

5. Procédé selon les revendications 1 à 4, dans lequel le moule a une chemise de refroidissement et est refroidi par de l'eau, et dans lequel la température de l'eau à la sortie de la chemise de refroidissement est égale ou inférieure à 25 °C, de préférence égale ou inférieure à 20 °C, le plus préférablement égale ou inférieure à 15 °C.

6. Procédé selon les revendications 1 à 5, dans lequel le PET est du PET vierge, du PET recyclé ou un mélange de ceux-ci.

7. Procédé selon les revendications 1 à 5, dans lequel l'agent de nucléation est d'abord dispersé dans un mélange maître de PET en une quantité comprise entre 5 % en poids et 50 % en poids.

8. Article PET moulé par injection, dans lequel le PET est le seul polymère présent dans l'article, comprenant un agent de nucléation en une quantité comprise entre 0,10 % en poids et 0,25 % en poids, des plastifiants en une quantité inférieure à 5 % en poids, et ayant un degré de cristallinité mesuré par ACD, selon la méthode divulguée dans la description, compris entre 18 % et 28 %.

9. Article selon la revendication 8, dans lequel l'agent de nucléation est un composé ou une composition qui conduit à une température de cristallisation Tc du PET telle que mesurée par ACD, selon la méthode divulguée dans la description pendant le premier refroidissement, supérieure à 200 °C.

10. Article selon la revendication 9, dans lequel la Tc est supérieure à 203 °C.

11. Article selon les revendications 8 à 10, comprenant en outre un ou plusieurs additifs conventionnels utilisés dans le moulage par injection choisis parmi les stabilisants, les antioxydants, les ignifugeants, les absorbeurs UV, les agents antistatiques, les lubrifiants.

12. Article selon les revendications 8 à 11, dans lequel l'article est un article de cuisine choisi parmi un bol, un plateau, une bassine, un verre, un couvert, un plat.

13. Article selon les revendications 8 à 12, dans lequel l'article est exempt de plastifiants.
